# EUROPEAN PATENT SPECIFICATION

(11) **EP 2 141 030 B1**
(45) Date of publication and mention of the grant of the patent: **22.02.2012**
(21) Application number: 07742319.2
(22) Date of filing: 24.04.2007
(51) Int. Cl.: B60C 7/00, B60C 7/10, B29D 30/00, B29D 30/02

(54) **NON-PNEUMATIC TIRE AND METHOD OF MANUFACTURING SAME**
VOLLREIFEN UND HERSTELLUNGSVERFAHREN DAFÜR
PNEU NON PNEUMATIQUE ET SON PROCÉDÉ DE FABRICATION

(43) Date of publication of application: 06.01.2010
(73) Proprietor: The Yokohama Rubber Co., Ltd., Minato-ku Tokyo 105-8685 (JP)
(72) Inventor: MATSUDA, Jun, Hiratsuka-shi Kanagawa 254-8601 (JP); HASHIMURA, Yoshiaki, Hiratsuka-shi Kanagawa 254-8601 (JP)
(74) Representative: HOFFMANN EITLE
(86) International application number: PCT/JP2007/058884
(87) International publication number: WO 2008/136099

(56) References cited:
- GB-A- 2 297 298
- JP-A- 11 506 403
- JP-A- 55 059 004
- US-A- 2 436 844
- US-A- 3 018 809
- US-A- 4 235 270

## Description

### TECHNICAL FIELD

The present invention relates to a non-pneumatic tire and a method of manufacturing the same. Embodiments of the non-pneumatic tire may exhibit excellent assemblability to a wheel.

### BACKGROUND ART

Although pneumatic tires are excellent in riding comfort, in order to maintain the performance, constant check of air pressure is necessary. Japanese patent application Tokuhyou No. 2005-500932, which discloses the features of the preamble of claim 1, proposes a product in which a non-pneumatic tire (non-air pressure tire) is constituted by joining a spoke structure including an annular outer peripheral member and an inner peripheral member connected to each other by a plurality of spokes to the inside of a tread ring and the non-pneumatic tire is integrally fixed to a wheel, as a tire that does not require the check of the air pressure and gives good riding comfort.

However, since the non-pneumatic tire is attached and fixed to a wheel as an assembly with the wheel, there was such a problem that, when the tire is worn or damaged, the operation of separating the tire from the wheel and assembling a new tire is very difficult.

GB2297298 A discloses a tyre which may be of a one piece, non-pneumatic construction, has an inner, preferably rigid, band with a resilient cover, the inner band having a means, such as gaps, for adusting the inner circumference of the tire to enable the tire to be fitted on or removed from a wheel rim, in the field, without the need for a mechanical press or the like.

A flexible non-pneumatic tire is also disclosed in US 3,018,809 A.

### SUMMARY OF THE INVENTION

According to a first aspect of the present invention, there is provided a non-pneumatic tire comprising a spoke structure including an annular outer peripheral member and an inner peripheral member connected to each other by a plurality of spokes, the spoke structure being joined to the inner circumferential side of a tread ring, wherein said inner peripheral member is divided into independent members in the circumferential direction of the tire, and wherein lengths of said independent members are periodically different in the circumferential direction of the tire.

According to a second aspect of the present invention, there is provided a method of manufacturing a non-pneumatic tire comprising the steps of: joining a spoke structure to one side of a belt-shaped unvulcanized rubber, the spoke structure including a belt-shaped outer peripheral member, and an inner peripheral member connected to each other by a plurality of spokes wherein said inner peripheral member is divided into independent members in the longitudinal direction; and turning the belt-shaped unvulcanized rubber into a ring and connecting both end portions with each other to form a tread ring (2) to be vulcanized and molded.

Embodiments of the present invention are able to provide a non-pneumatic tire easily assemblable to and dismountable from a wheel, and a method of manufacturing the same.

In embodiments of the non-pneumatic tire of the present invention, the inner peripheral member constituting the spoke structure is divided into independent members in the circumferential direction of the tire, and, therefore, assembling to and dismounting from a wheel can easily be performed because, when it is assembled to a wheel and dismounted from the wheel, each of independent members constituting the inner peripheral member easily changes the position in the tire radial direction caused by the flexure of the spoke.

With embodiments of the method of manufacturing a non-pneumatic tire of the present invention, since it is sufficient to join the spoke structure to the belt-shaped unvulcanized rubber and then to turn the product into a ring shape to be vulcanized and molded, it is possible to manufacture the non-pneumatic tire easily at low cost without requiring particular facilities.

### BRIEF DESCRIPTION OF THE DRAWINGS

To enable a better understanding of the present invention, and to show how the same may be carried into effect, reference will now be made, by way of example only, to the accompanying drawings, in which:-
Fig. 1A is a perspective view of the whole of one exemplary embodiment of a non-pneumatic tire of the present invention;
Fig. 1B is an enlarged perspective view of an essential part of the one exemplary embodiment of the non-pneumatic tire of the present invention;
Fig. 2 is an enlarged perspective view showing the essential part of another exemplary embodiment of the non-pneumatic tire of the present invention;
Fig. 3 is a cross-sectional view in the meridian direction showing another exemplary embodiment of the non-pneumatic tire of the present invention;
Fig. 4A is a perspective view of the whole of an embodiment of the non-pneumatic tire of the present invention after being assembled to a wheel;
Fig. 4B is a cross-sectional view of the essential part in the meridian direction of the embodiment of the non-pneumatic tire of the present invention after being assembled to the wheel; and
Fig. 5 is an explanatory view that exemplifies an embodiment of a method of-manufacturing a non-pneumatic tire of the present invention.

### DETAILED DESCRIPTION

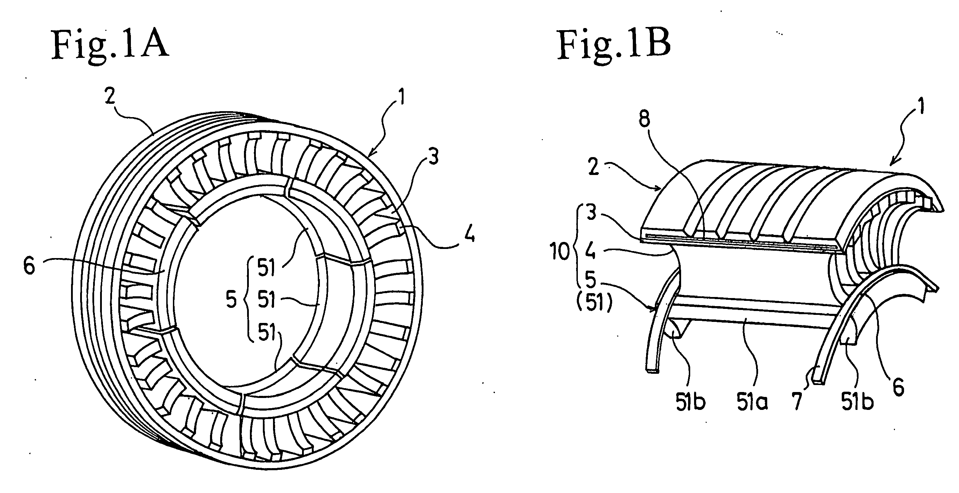

Figs. 1A and 1B show one exemplary embodiment of a non-pneumatic tire of the present invention, wherein Fig. 1A is a perspective view of the whole, and Fig. 1B is an enlarged perspective view showing a part in the circumferential direction in a divided state.

As shown in Figs. 1A and 1B, a non-pneumatic tire 1 is constituted by having a tread ring 2 consisting of annular rubber at the outermost periphery, and being joined with an annular spoke structure 10 on the inner periphery side. The spoke structure 10 is integrally constituted of an outer peripheral member 3, spokes 4 and an inner peripheral member 5. Among these, the outer peripheral member 3 is constituted so that a belt-shaped member having approximately the same width as that of the tread ring 2 continues annularly in the circumferential direction of the tire. In contrast, the inner peripheral member 5 is formed by being divided into independent members 51 in the circumferential direction of the tire, and the independent member 51 is formed so as to have a protrusion 51b inside both end portions of supporting portion 51a, respectively, having approximately the same width as that of the outer peripheral member 3. It is so constituted that a plurality of blade-shaped spokes 4 connects such outer peripheral member 3 and independent member 51 of the inner peripheral member 5 with each other in the circumferential direction with a space.

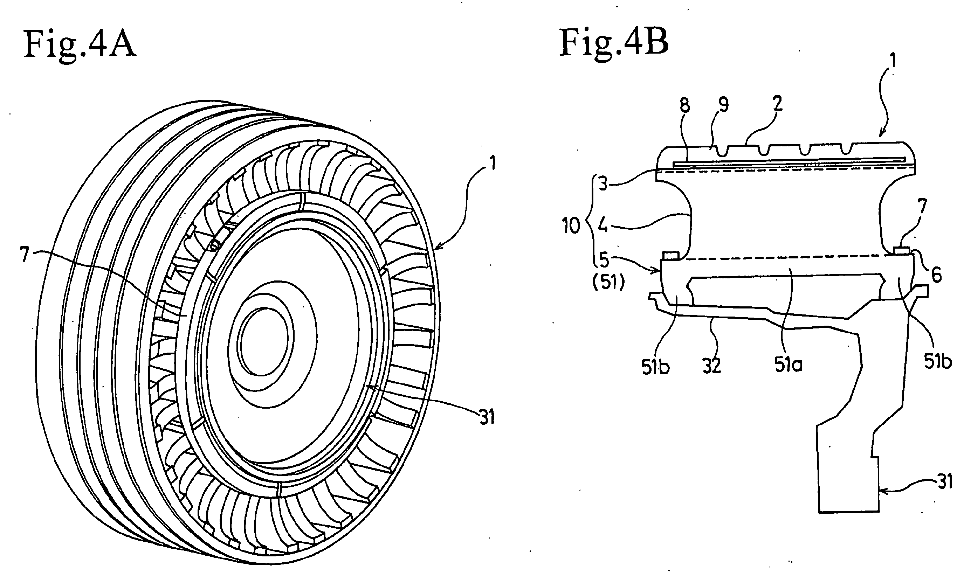

Fig. 4A shows the circumstance in which the non-pneumatic tire is assembled to a wheel 31, and Fig. 4B shows the essential part after the mounting as a cross-sectional view.

In the assembling of the disclosed non-pneumatic tire 1 to a wheel, since the inner peripheral member 5 is divided into independent members 51 in the circumferential direction, when assembling it to the wheel 31, external force toward the outside in the radial direction is added to respective independent members 51 to bend and displace respective spokes 4 in the tire radial direction. Therefore, it is possible to allow the protrusion 51b to climb easily over a rim 32 and seat onto the rim seat. Further, the dismounting work can also be operated easily in the same way. Furthermore, preferably, after the rim assembling, by winding a connection means 7 around a fastening face 6 at the outer periphery of both end portions of the inner peripheral member 5 and performing the fastening, further strong mounting is possible.

As a wheel to which the non-pneumatic tire of the present invention is assembled, an exclusive wheel may newly be designed, or existing standard wheels for a pneumatic tire can directly be used.

In embodiments of the present invention, in the inner peripheral member 5, a space is preferably provided between independent members 51 mutually adjacent to each other. This allows each of the independent members 51 to easily displace independently in the radial direction, and can increase the degree of freedom relative to the difference in diameters of wheels. Further, the lengths of the independent members 51 in the circumferential direction of the tire are made different periodically. By making the lengths in the circumferential direction of the tire different periodically, the vibration at driving due to the tire rotation can be dispersed to improve the ride comfort.

Although no particular limitation is imposed on the shape of the spoke 4, but it may be preferable to form the spoke in a blade shape as shown in Fig. 1B and to arrange it so that the face direction of the blade points to the width direction of the tire. Such shape and arrangement support the tread ring 2 over the whole width to make an arrangement possible with a uniform face pressure in the width direction at appropriate pitches in the circumferential direction, thereby giving good ride comfort.

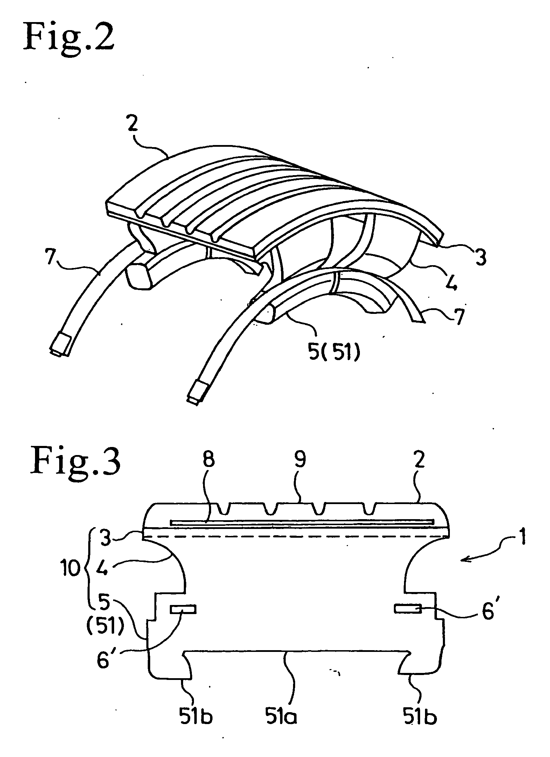

The spokes 4 formed in a blade shape are arranged so as to be elongated in the width direction of the tire as shown in Fig. 1B, or may be arranged obliquely relative to the circumferential direction of the tire. Further, the spokes 4 may be arranged so that the face of the blade is directed to the circumferential direction of the tire with spaces in the circumferential direction, as the embodiment in Fig. 2. The example shown in the drawing has a pair of right and left spokes 4, and further, in order to make the face pressure of the tread ring 2 uniform in the width direction, at least one spoke may be additionally arranged also at the midpoint of the width direction of the tire.

For the tread ring 2, rubber is used because it is excellent in frictional force and wear resistance in ground-contacting. Further, in order to reinforce the rubber layer, a reinforcing cord layer 8 is preferably buried. As the reinforcing cord layer 8, one made of a steel cord and one made of an organic fiber cord may be employed. In the case of the organic fiber cord, an aramid fiber, polyketone fiber and the like having a high strength and elastic modulus are preferably used.

In the spoke structure 10, the outer peripheral member 3 and the inner peripheral member 5 are favorably constituted of rubber, resin and the like. Further, the spoke 4 can be constituted of at least one kind selected from resin, rubber and metal. For the purpose of enabling the spoke to perform action substitutable for the air pressure in pneumatic tires, the material selected from the resin, rubber, and metal favorably has an excellent toughness and a suitable degree of elasticity. The resin, rubber and metal may be used separately, and a complex material containing plural kinds of them may also be used. In particular, when it is constituted of resin and/or rubber, it is also possible to insert a reinforcing cord layer or to mix a short fiber for reinforcement. Furthermore, when inserting the reinforcing cord layer, a surface treatment is preferably applied in order to improve the adhesiveness with resin or rubber to be the matrix.

In embodiments of the present invention, the connecting means 7 used as an auxiliary means for fixing the non-pneumatic tire 1 to the wheel 31 may be a belt-shaped band, and a rope-shaped one. As the material, resin and metal are usable. As a means for connecting both end portions of the connecting means 7 with each other, publicly known metal parts are usable for any material.

The connecting means 7 is preferably hung over the inner peripheral member 5 of the spoke structure 10. The connecting face 6 to be hung over may be the outer circumferential face of the shoulder portion of the inner circumferential portion 5, as exemplified in Figs. 1, 2 and 4, and also a through hole 6' that passes through each of the end portions of the inner peripheral member 5 (independent member 51) in the circumferential direction, as shown in Fig. 3. By utilizing the through hole 6' in this way, it is possible to prevent the connecting means 7 from displacing in the width direction and falling off, and to fix reliably the tire 1 to the wheel 31.

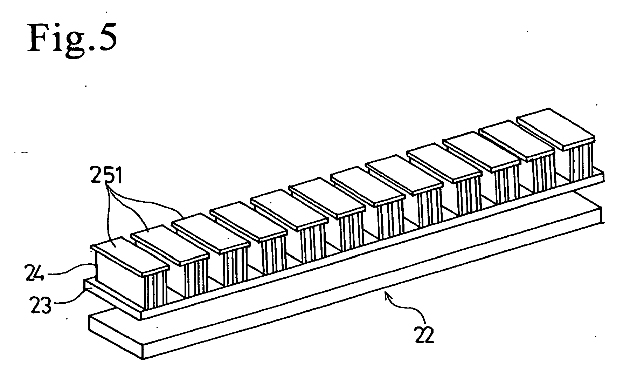

Although no particular limitation is imposed on the method of manufacturing the non-pneumatic tire, the method exemplified in Fig. 5 enables only simple facilities to manufacture the tire.

As a material for the tread ring, an unvulcanized rubber 22 continuously molded in a belt shape is previously prepared. Further, as a material for the spoke structure, a structure is prepared, which is formed by connecting an independent member 251 to an outer peripheral member 23 continuously molded in a belt shape by a plurality of blade-shaped spoke members 24 and intermittently arranging a plurality of the structural portions of the independent member 251 in the longitudinal direction of the outer peripheral member 23. The material for the spoke structure may be a molded body of unvulcanized rubber, or a molded body of vulcanized rubber or resin. Further, as the spoke member 24, a metal material may be used.

Each of the material for the tread ring and the material for the spoke structure prepared as described above is cut in a length corresponding to one circuit of the tire, and then the outer peripheral member 23 of the material for spoke structure is stuck together to the unvulcanized rubber 22 of the material for tread ring, as shown in Fig. 5. Next, the composite after the stacking is wound around a cylindrical drum so as to lay the material for spoke structure on the inside, and both end portions of the unvulcanized rubber 22 are joined to each other. When the material for spoke structure is also constituted of unvulcanized rubber, both end portions are joined to each other in the same way, but, when it is constituted of vulcanized rubber or resin, they may be joined utilizing an adhesive and the like.

Next, by winding a forming member of tread patterns (not shown) around the outer periphery of the unvulcanized rubber 22 wound in a cylindrical shape, and inserting the product in an oven and the like to vulcanize, it is possible to manufacture a non-pneumatic tire. As the forming member, one formed from a resin excellent in mold releasability in a belt shape as a flexible member, or one made of metal and constituted as an annular mold divided into a plurality of pieces can be used.

With embodiments of the method of manufacturing a non-pneumatic tire according to the present invention, since it is sufficient to join the spoke structure to the belt-shaped unvulcanized rubber, and then to turn the product into a ring shape to be vulcanized and molded, the manufacturing can be carried out without particular facilities, simply at low cost.

## Claims

1. A non-pneumatic tire (1) comprising a spoke structure (10) including an annular outer peripheral member (3) and an inner peripheral member (5) connected to each other by a plurality of spokes (4), the spoke structure being joined to the inner circumferential side of a tread ring (2), **characterized in that** said inner peripheral member (5) is divided into independent members (51) in the circumferential direction of the tire, and wherein lengths of said independent members (51) are periodically different in the circumferential direction of the tire.

2. The non-pneumatic tire according to claim 1, wherein a space lies between said independent members (51) that are adjacent to each other.

3. The non-pneumatic tire according to claim 1 or 2, wherein a connecting means (7) that continues in the circumferential direction of the tire is hung over said independent members (51).

4. The non-pneumatic tire according to any of claims 1 to 3, wherein said spokes (4) are formed in blade shapes, and the face direction of the blade is arranged in the width direction of the tire.

5. The non-pneumatic tire according to any of claims 1 to 3, wherein said spokes are formed in blade shapes, and the face direction of the blade is arranged in the circumferential direction of the tire.

6. The non-pneumatic tire according to any of claims 1 to 5, wherein said tread ring (2) has a constitution in which a reinforcing cord layer (8) is buried in an annular rubber layer.

7. The non-pneumatic tire according to any of claims 1 to 6, wherein said spokes (4) are constituted of at least one kind selected from resin, rubber and metal.

8. A method of manufacturing a non-pneumatic tire comprising the steps of:
joining a spoke structure (10) to one side of a belt-shaped unvulcanized rubber (22), the spoke structure including a belt-shaped outer peripheral member (3, 23) and an inner peripheral member (5) connected to each other by a plurality of spokes (4) wherein said inner peripheral member (5) is divided into independent members (51, 251) in the longitudinal direction; and
turning the belt-shaped unvulcanized rubber (22) into a ring and connecting both end portions with each other to form a tread ring (2) to be vulcanized and molded.

9. The method of manufacturing a non-pneumatic tire according to claim 8, wherein the spoke structure (10) before being joined to said belt-shaped unvulcanized rubber (22) consists of unvulcanized rubber.

10. The method of manufacturing a non-pneumatic tire according to claim 8, wherein the spoke structure (10) before being joined to said belt-shaped unvulcanized rubber (22) consists of vulcanized rubber or resin.

## Patentansprüche

1. Vollreifen (1) mit einer Speichenstruktur (10), die ein ringförmiges äußeres Umfangselement (3) und ein inneres Umfangselement (5) aufweist, die miteinander durch mehrere Speichen (4) verbunden sind, wobei die Speichenstruktur mit der inneren Umfangsseite eines Laufflächenrings (2) verbunden ist, **dadurch gekennzeichnet, dass** das innere Umfangselement (5) in unabhängige Elemente (51) in der Umfangsrichtung des Reifens aufgeteilt ist, und wobei Längen der unabhängigen Elemente (51) in der Umfangsrichtung des Reifens periodisch verschieden sind.

2. Vollreifen nach Anspruch 1, bei der eine Aussparung zwischen denjenigen unabhängigen Elementen (51) liegt, die zueinander benachbart sind.

3. Vollreifen nach Anspruch 1 oder 2, bei der eine Verbindungseinrichtung (7), die in der Umfangsrichtung des Reifens weitergeht, über die unabhängigen Elemente (51) gehängt ist.

4. Vollreifen nach einem der Ansprüche 1 bis 3, bei dem die Speichen (4) in Schaufelformen ausgebildet sind und die Vorderrichtung der Schaufel in der Breitenrichtung des Reifens angeordnet ist.

5. Vollreifen nach einem der Ansprüche 1 bis 3, bei dem die Speichen in Schaufelformen ausgebildet sind und die Vorderrichtung der Schaufel in der Umfangsrichtung des Reifens angeordnet ist.

6. Vollreifen nach einem der Ansprüche 1 bis 5, bei dem der Laufflächenring (2) eine Ausbildung aufweist, in der eine verstärkende Kordschicht (8) in eine ringförmige Gummischicht eingebettet ist.

7. Vollreifen nach einem der Ansprüche 1 bis 6, bei dem die Speichen (4) aus wenigstens einer Sorte ausgebildet sind, die aus Harz, Gummi und Metall ausgewählt ist.

8. Verfahren zum Herstellen eines Vollreifens mit den folgenden Schritten:
Verbinden einer Speichenstruktur (10) mit einer Seite eines riemenförmigen, unvulkanisierten Gummis (22), wobei die Speichenstruktur ein riemenförmiges äußeres Umfangselement (3, 23) und ein inneres Umfangselement (5) aufweist, die miteinander durch mehrere Speichen (4) verbunden sind, wobei das innere Umfangselement (5) in unabhängige Elemente (51, 251) in der Längsrichtung aufgeteilt ist; und
Umwandeln des riemenförmigen, unvulkanisierten Gummis (22) in einen Ring und Verbinden beider Endabschnitte miteinander, um einen Laufflächenring (2) zu bilden, der zu vulkanisieren und zu formen ist.

9. Verfahren zum Herstellen eines Vollreifens nach Anspruch 8, bei dem die Speichenstruktur (10), bevor sie zu dem riemenförmigen, unvulkanisierten Gummi (2) verbunden wird, aus unvulkanisiertem Gummi besteht.

10. Verfahren zum Herstellen eines Vollreifens nach Anspruch 8, bei dem die Speichenstruktur (10), bevor sie mit dem riemenförmigen, unvulkanisierten Gummi (22) verbunden wird, aus vulkanisiertem Gummi oder Harz besteht.

## Revendications

1. Bandage non-pneumatique (1) comprenant une structure à rayons (10) incluant un élément périphérique extérieur annulaire (3) et un élément périphérique intérieur (5) reliés l'un à l'autre par une pluralité de rayons (4), la structure à rayons étant reliée au côté circonférentiel intérieur d'un anneau de bande de roulement (2), **caractérisé en ce que** ledit élément périphérique intérieur (5) est divisé en éléments indépendants (51) dans la direction circonférentielle du bandage, et où les longueurs desdits éléments indépendants (51) sont périodiquement différentes dans la direction circonférentielle du bandage.

2. Bandage non-pneumatique selon la revendication 1, où un espace se situe entre lesdits éléments indépendants (51) qui sont adjacents les uns aux autres.

3. Bandage non-pneumatique selon la revendication 1 ou 2, où un moyen de connection (7) qui continue dans la direction circonférentielle du bandage est accroché sur lesdits éléments indépendants (51).

4. Bandage non-pneumatique selon l'une quelconque des revendications 1 à 3, où lesdits rayons (4) sont formés en des formes de lame, et la direction de face de la lame est agencée dans la direction de la largeur du bandage.

5. Bandage non-pneumatique selon l'une quelconque des revendications 1 à 3, où lesdits rayons sont réalisés en des formes de lame, et la direction de la face de la lame est agencée dans la direction circonférentielle du bandage.

6. Bandage non-pneumatique selon l'une quelconque des revendications 1 à 5, où ledit anneau de bande de roulement (2) a une constitution dans laquelle une couche de cordes de renforcement (8) est noyée dans une couche de caoutchouc annulaire.

7. Bandage non-pneumatique selon l'une quelconque des revendications 1 à 6, où lesdits rayons (4) sont constitués d'au moins une sorte sélectionnée parmi la résine, le caoutchouc et le métal.

8. Procédé de fabrication d'un bandage non-pneumatique comprenant les étapes de:
relier une structure à rayons (10) à un côté d'un caoutchouc non vulcanisé en forme de ceinture (22), la structure à rayons incluant un élément périphérique extérieur en forme de ceinture (3, 23) et un élément périphérique intérieur (5) reliés l'un à l'autre par une pluralité de rayons (4), où ledit élément périphérique intérieur (5) est divisé en éléments indépendants (51, 251) dans la direction longitudinale; et
tourner le caoutchouc non vulcanisé en forme de ceinture (22) en un anneau et reliant les deux portions d'extrémité l'une à l'autre pour former un anneau de bande de roulement (2) destiné à être vulcanisé et moulé.

9. Procédé de fabrication d'un bandage non-pneumatique selon la revendication 8, où la structure à rayons (10), avant d'être reliée audit caoutchouc non-vulcanisé en forme de ceinture (22), est constituée de caoutchouc non-vulcanisé.

10. Procédé de fabrication d'un bandage non-pneumatique selon la revendication 8, où la structure à rayons (10), avant d'être reliée audit caoutchouc non-vulcanisé en forme de ceinture (22), consiste en caoutchouc vulcanisé ou en résine.
